# EUROPÄISCHE PATENTSCHRIFT

(11) **EP 1 626 199 B1**
(45) Veröffentlichungstag und Bekanntmachung des Hinweises auf die Patenterteilung: **22.04.2009**
(21) Anmeldenummer: 05015289.1
(22) Anmeldetag: 14.07.2005
(51) Int. Cl.: F16F 15/14, F16F 15/30, F16F 15/139

(54) **Drehschwingungsdämpfungseinrichtung**
Torsional vibration damper
Amortisseur de vibrations torsionelles

(30) Priorität: 11.08.2004 DE 102004038986
(43) Veröffentlichungstag der Anmeldung: 15.02.2006
(73) Patentinhaber: LuK Lamellen und Kupplungsbau Beteiligungs KG, 77815 Bühl (DE)
(72) Erfinder: Lehmann, Steffen, 76275 Ettlingen (DE); Fechler, Christian, 76135 Karlsruhe (DE)
(74) Vertreter: Duschl, Edgar Johannes

(56) Entgegenhaltungen:
- EP-A- 1 503 105
- DE-C- 737 207
- FR-A- 2 554 890
- US-A1- 2002 002 960
- US-A1- 2004 127 295

## Beschreibung

Die Erfindung betrifft eine Drehschwingungsdämpfungseinrichtung, insbesondere einen Wangentilger, zur Anbringung an einer Kurbelwelle eines Kolbenmotors, insbesondere einer Brennkraftmaschine, wobei die Drehschwingungsdämpfungseinrichtung eine Mitnehmerscheibe sowie eine mit dieser drehfest verbundene Gegenscheibe, die in axialer Richtung von der Mitnehmerscheibe beabstandet ist, aufweist. Die Erfindung betrifft auch eine Kurbelwelle und einen Kolbenmotor mit einer Kurbelwelle.

Herkömmliche Drehschwingungsdämpfungseinrichtungen auf Kurbelwellen, insbesondere Wangentilger, umfassen oft eine Vielzahl von Guss- oder Schmiedeteilen, die aufwendig nachgearbeitet werden müssen.

Durch die EP 1 503 105 A1 ist auch eine Drehschwingungsdämpfungseinrichtung bekannt geworden, bei der Blechformteile Anwendung finden.

Weiterhin ist durch die FR 2 554 890 A1 eine als Zweimassenschwungrad ausgebildete Dämpfungseinrichtung bekannt geworden, die zur Drehmomentübertragung dient.

Durch die DE 737 207 ist weiterhin ein Schwungrad bekannt geworden, das als Dämpfermasse benutzt werden kann.

Aufgabe der Erfindung ist es daher, eine Drehschwingungsdämpfungseinrichtung, insbesondere einen Wangentilger, der eingangs geschilderten Art zu schaffen, der kostengünstig herstellbar ist.

Die Aufgabe wird bei einer Drehschwingungsdämpfungseinrichtung der eingangs beschriebenen Art dadurch gelöst, dass axial zwischen der Mitnehmerscheibe und der Gegenscheibe zwei kreisscheibenförmige Schwungmasseneinrichtungen aufgenommen sind, die radial außen jeweils einen abgewinkelten Randbereich aufweisen, der jeweils mit seiner inneren Umfangsfläche an einer in Umfangsrichtung verlaufenden Lager- und/oder Reibfläche, die radial außen an der Mitnehmerscheibe und der Gegenscheibe vorgesehen ist, drehbar gelagert sind. Sowohl die Mitnehmerscheibe als auch die Schwungmasseneinrichtung sowie weitere Teile der Drehschwingungsdämpfungseinrichtung sind aus Blech gebildet. Die Blechteile liefern den Vorteil, dass sie einfach und kostengünstig herstellbar sind. Die Blechteile können zum Beispiel aus gezogenem Blech hergestellt sein. Einzelne Bereiche der Blechteile, wie Borungen oder Aussparungen, können ausgestanzt sein. Es ist auch möglich, einzelne Bereiche der Blechteile spanend zu bearbeiten. Die erfindungsgemäß gestaltete Mitnehmerscheibe ermöglicht eine weitgehend rotationssymmetrische Formgebung. Die erfindungsgemäße Drehschwingungsdämpfungseinrichtung benötigt sowohl in axialer Richtung als auch in radialer Richtung mehr Bauraum als herkömmliche Drehschwingungsdämpfungseinrichtungen. Der größere Bauraum wird bewusst in Kauf genommen um das Massentätigkeitsmoment der schwingenden Bauteile zu vergrößern. Über die Mitnehmerscheibe können Drehmomente von der Kurbelwelle in die Drehschwingungsdämpfungseinrichtung eingeleitet werden. An der Mitnehmerscheibe können Reibbeläge und/oder Gleitlagerflächen angebracht sein.

Vorzugsweise ist die schwingende Masse der Schwungmasseneinrichtung hauptsächlich radial außen angeordnet. Dadurch erhöht sich das Massenträgheitsmoment der Schwungmasseneinrichtung.

Die Gegenscheibe der Drehschwingungsdämpfungseinrichtung ist vorzugsweise mit Hilfe von mehreren Abstandsbolzen an der Mitnehmerscheibe befestigt

Ein weiteres bevorzugtes Ausführungsbeispiel der Drehschwingungsdämpfungseinrichtung ist dadurch gekennzeichnet, dass die Gegenscheibe radial außen eine in Umfangsrichtung unterbrochene Lager- und/oder Reibfläche aufweist, an der eine weitere Schwungmasseneinrichtung drehbar gelagert ist Die Gegenscheibe hat im Wesentlichen die Gestalt eines Hufeisens.

Ein weiteres bevorzugtes Ausführungsbeispiel der Drehschwingungsdämpfungseinrichtung ist dadurch gekennzeichnet, dass die beiden Schwungmasseneinrichtungen eine zentrale Öffnung aufweisen. Die zentrale Öffnung dient zur Aufnahme eines Wellenzapfens der Kurbelwelle.

Ein weiteres bevorzugtes Ausführungsbeispiel der Drehschwingungsdämpfungseinrichtung ist dadurch gekennzeichnet, dass die Mitnehmerscheibe, die Gegenscheibe und die Schwungmasseneinrichtungen jeweils mehrere Fenster aufweisen. Die Fenster dienen zur Aufnahme von Druckfedern, durch welche die Schwungmasseneinrichtungen mit der Mitnehmerscheibe und der Gegenscheibe gekoppelt sind.

Bei einer Kurbelwelle für einen Kolbenmotor, insbesondere einer Brennkraftmaschine, mit mehreren Wangen, ist die oben angegebene Aufgabe dadurch gelöst, dass eine vorab beschriebene Drehschwingungsdämpfungseinrichtung an einer Wange der Kurbelwelle befestigt ist. Vorzugsweise ist die Gestalt der Wange an die Drehschwingungsdämpfungseinrichtung angepasst.

Bei einem Kolbenmotor, insbesondere einer Brennkraftmaschine, ist die oben angegebene Aufgabe durch eine vorab beschriebene Kurbelwelle gelöst.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: die Darstellung eines Schnitts durch eine erfindungsgemäße Drehschwingungsdämpfungseinrichtung, die auf die Kurbelwelle eines Kolbenmotors montiert ist;
- Figur 2: die Draufsicht auf den Dämpfer,
- Figur 3: einen vergrößerten Ausschnitt aus Figur 1;
- Figur 4: eine ähnliche Darstellung wie in Figur 3 gemäß einem Schnitt durch einen Abstandsbolzen;
- Figur 5: eine Explosionsdarstellung der erfindungsgemäßen Drehschwingungsdämp fungseinrichtung;
- Figur 6: die Ansicht eines Querschnitts durch eine erfindungsgemäße Drehschwingungsdämpfungseinrichtung mit eingezeichneten Federvorspannkraftvektoren und
- Figur 7: eine Aufsummierung der Federvorspannkraftvektoren aus Figur 6 in graphischer Form.

Drehschwingungsdämpfungseinrichtungen, die auch als Schwingungstilger bezeichnet werden, dienen unter anderem dazu, Torsionsschwingungsamplituden von Kurbelwellen zu reduzieren, wenn diese in ihrer Eigenfrequenz angeregt werden. In vielen Fällen ist eine solche Eigenfrequenz im Bereich von circa 100 bis 450 Hz vorhanden. Diese wird insbesondere durch die Ungleichförmigkeit der in den Zylindern eines Kolbenmotors stattfindenden Kompressionen und Expansionen angeregt, die über die Kolben und die Pleuel auf die Kurbelwelle übertragen wird. Ein Schwingen in der Torsionsresonanz kann zum Bruch der Kurbelwelle führen, weshalb Drehschwingungsdämpfer beziehungsweise Drehschwingungstilger eingesetzt werden. Die Drehschwingungsdämpfungseinrichtung wird auch als Torsionsschwingungsdämpfungseinrichtung bezeichnet.

Eine Drehschwingungsdämpfungseinrichtung mit Federkopplung besteht prinzipiell aus einer Drehmasse mit einem definierten Massenträgheitsmoment, die über Federelemente mit der Kurbelwelle gekoppelt ist. Aus der Verdrehsteifigkeit der Federelemente und dem Massenträgheitsmoment der Drehmasse ergibt sich die Eigenfrequenz des Dämpfers, die auf die Eigenfrequenz der Kurbelwelle abgestimmt sein muss. Durch die Drehschwingungsdämpfungseinrichtung werden die Schwingungseigenschaften der Kurbelwelle verändert. Das System erhält einen zusätzlichen Freiheitsgrad, wobei die ursprüngliche Resonanzstelle bei Dämpfung null vollständig verschwindet. Dafür treten zwei neue Resonanzen auf. Bei einer sehr hohen Dämpfung ergibt sich keine Wirkung, da der Dämpfer dann quasi starr angekoppelt ist. Der Dämpfer zeigt dann annähernd die Grundresonanz der Kurbelwelle. Bei richtiger Auslegung der Dämpfung treten weder neue noch die ursprünglichen Resonanzen störend hervor.

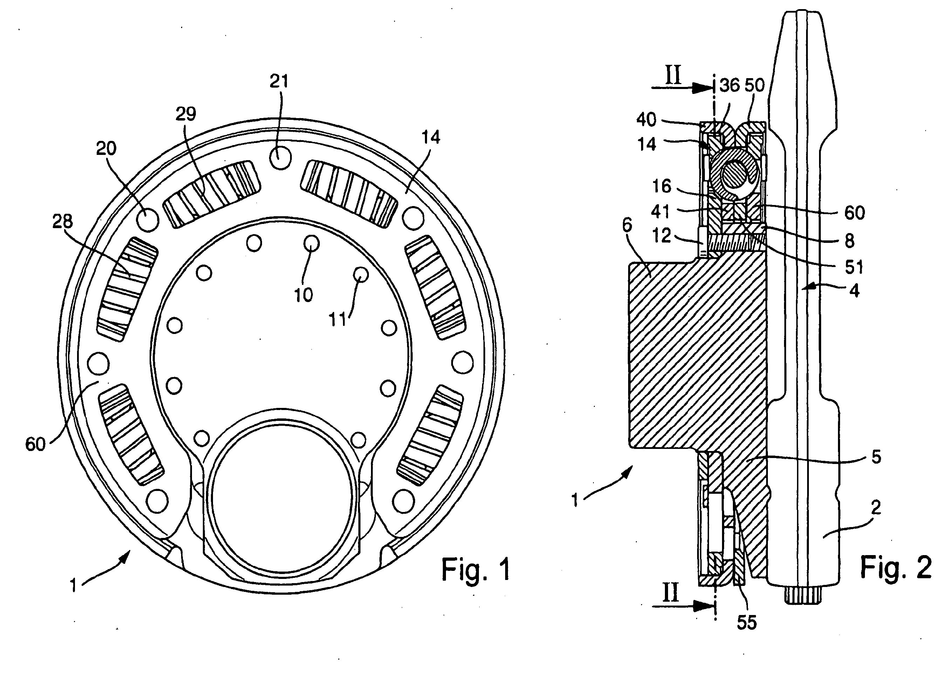

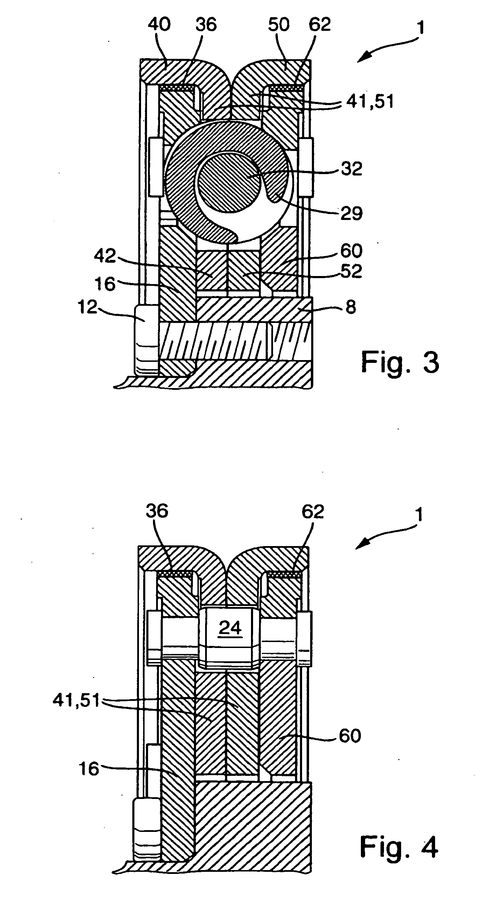

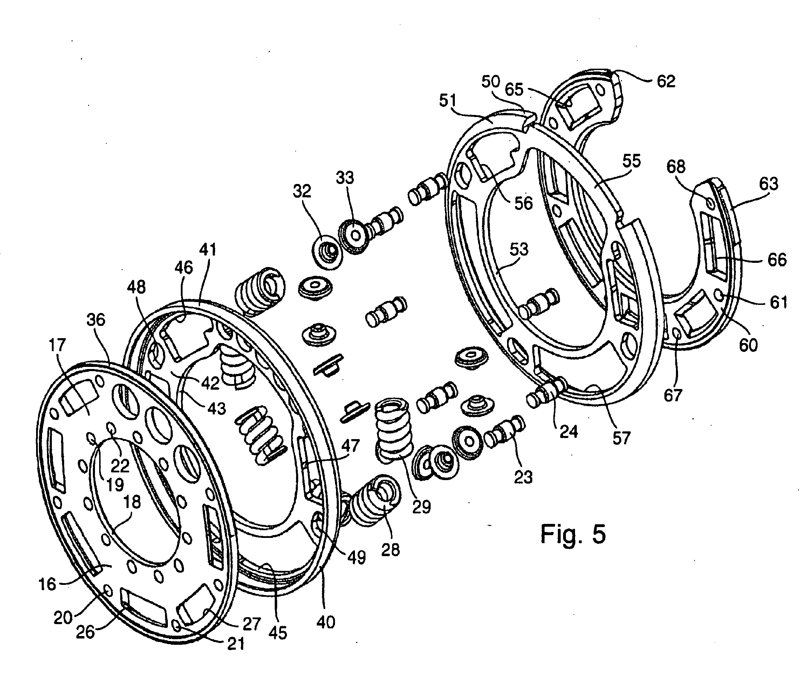

In den Figuren 1 bis 5 ist ein Detail einer Brennkraftmaschine dargestellt, die eine Kurbelwelle 1 umfasst. Die Kurbelwelle 1 ist in einem (nicht dargestellten) Gehäuse der Brennkraftmaschine drehbar gelagert. Die Kurbelwelle 1 weist einen Kurbelzapfen 2 auf, an dem in bekannter Weise ein Pleuel 4 gelagert ist, das auch als Schubstange bezeichnet wird. Die Kurbelwelle 1 dient dazu, aus einer Hin- und Herbewegung des (nicht dargestellten) Kolbens ein Drehmoment zu erzeugen.

In den Figuren 1 bis 5 ist lediglich eine prinzipielle Darstellung eines möglichen Aufbaukolbenmotors angedeutet. Es wird daher bezüglich des genaueren Aufbaus von Kolbenmotoren auf die Fachliteratur verwiesen, zum Beispiel Dubbel "Taschenbuch für den Maschinenbau", 18. Aufl., Seiten P80-P87 sowie auf das "Kraftfahrtechnische Taschenbuch", 22. Aufl. von Bosch, Seiten 382-399.

Beidseits des Kurbelzapfens 4 erstreckt sich jeweils eine Kurbelwange 5, von denen in den Figuren 1 bis 4 nur eine dargestellt ist. Von der Kurbelwange 5 geht ein Wellenzapfen 6 aus, der zur Lagerung der Kurbelwelle 1 in dem Gehäuse der Brennkraftmaschine dient. Die Rotationsachse der Kurbelwelle 1 stimmt mit der Rotationsachse des Wellenzapfens 6 überein. An ihrem anderen Ende weist die Kurbelwelle 1 einen weiteren (nicht dargestellten) Wellenzapfen auf.

In einem Übergangsbereich zwischen dem Wellenzapfen 6 und der Wange 5 ist an der Kurbelwelle 1 ein Ringflansch 8 mit mehreren Durchgangsbohrungen 10, 11 ausgebildet, die sich in axialer Richtung erstrecken und über den Umfang des Ringflansches 8 verteilt angeordnet sind. Die Durchgangsbohrungen 10, 11 sind mit Innengewinden ausgestattet, die komplementär zu den Außengewinden von Schrauben 12 ausgebildet sind, mit Hilfe derer ein insgesamt mit 14 bezeichneter Schwingungsdämpfer an dem Ringflansch befestigt ist.

Der Schwingungsdämpfer 14 umfasst eine Mitnehmerscheibe 16, die von einer Kreisscheibe 17 mit einem zentralen Durchgangsloch 18 gebildet wird. Das Durchgangsloch 18 dient zur Aufnahme des Wellenzapfens 6. Radial außerhalb des Durchgangslochs 18 sind mehrere Durchgangsbohrungen 19, 22 zum Durchführen der Schrauben 12 vorgesehen. Außerdem sind in der Kreisscheibe 17 mehrere Durchgangslöcher 20, 21 zur Befestigung von Abstandsbolzen 23, 24 vorgesehen. Des Weiteren sind in der Kreisscheibe 17 in Umfangsrichtung längliche Fenster 26, 27 ausgespart, die zur teilweisen Aufnahme von Druckfedern 28, 29 dienen. Die Druckfedern 28, 29 sind an ihren Enden zwischen Führungsnäpfen 32, 33 eingespannt. Radial außen ist beziehungsweise sind an der Kreisscheibe 17 eine oder mehrere Reib-/Gleitflächen 36 ausgebildet.

Radial außen an der Reib-/Gleitfläche 36 der Mitnehmerscheibe 16 befindet sich ein Kragen 40 in Anlage, der an einer ersten Schwungmasse 41 ausgebildet ist. Die erste Schwungmasse 41 hat im Wesentlichen die Gestalt einer Kreisscheibe 42 mit einem zentralen Durchgangsloch 43. Das zentrale Durchgangsloch 43 dient zur Aufnahme des Wellenzapfens 6. Der Kragen 40 ist im Wesentlichen um 90° von der Kreisscheibe 42 abgewinkelt. In der Kreisscheibe 42 sind mehrere Fenster 45, 46, 47 zur teilweisen Aufnahme der Druckfedern 28, 29 vorgesehen. Außerdem sind in der Kreisscheibe 42 Durchgangslöcher 48, 49 für die Abstandsbolzen 23, 24 vorgesehen. Die Durchgangslöcher 48, 49 sind als Langlöcher ausgebildet, so dass eine Bewegung der Abstandsbolzen 23, 24 in Umfangsrichtung ermöglicht wird.

Auf der der Mitnehmerscheibe 16 abgewandten Seite der ersten Schwungmasse 41 ist eine zweite Schwungmasse 51 mit einem Kragen 50 angeordnet, der sich in entgegengesetzter Richtung zu dem Kragen 40 der ersten Schwungmasse 41 erstreckt. Die zweite Schwungmasse 51 hat ebenfalls die Gestalt einer Kreisscheibe 52, die ein zentrales Durchgangsloch 53 für den Wellenzapfen 6 aufweist. In der Kreisscheibe 52 sind mehrere Fenster 56, 57 zur teilweisen Aufnahme der Druckfedern 28, 29 ausgespart. Der Kragen 50 ist bei der zweiten Schwungmasse 51 nicht durchgehend ausgebildet, sondern im Bereich eines Steges 55 unterbrochen.

Die beiden Schwungmassen 41, 51 sind, in axialer Richtung betrachtet, zwischen der Mitnehmerscheibe 16 und einer Gegenscheibe 60 angeordnet, welche im Wesentlichen die Gestalt eines Hufeisens 61 aufweist. Radial außen sind an der Gegenscheibe 60 mehrere Gleit-/Reibflächen 62, 63 ausgebildet. An den Gleit-/Reibflächen 62, 63 befindet sich der Kragen 50 der zweiten Schwungmasse 51 in Anlage. Die Gegenscheibe 60 weist mehrere Fenster 65, 66 auf, die zur teilweisen Aufnahme der Druckfedern 28, 29 dienen. Die Fenster in der Gegenscheibe 60 fluchten mit den Fenstern in der Mitnehmerscheibe 16 und den Schwungmassen 41, 51. Außerdem weist die Gegenscheibe 60 in dem Hufeisen 61 mehrere Durchgangslöcher 68, 69 auf, die zur Befestigung der Abstandsbolzen 23, 24 dienen. Mit Hilfe der Abstandsbolzen 23, 24 ist die Gegenscheibe 60 an der Mitnehmerscheibe 16 befestigt. Durch die Abstandsbolzen 23, 24 wird zwischen der Mitnehmerscheibe 16 und der Gegenscheibe 60 ein Zwischenraum geschaffen, in dem die Schwungmassen 41 und 51 drehbar angeordnet sind.

Der erfindungsgemäße Torsionsschwingungsdämpfer 14 dient dazu, Torsionsschwingungen der Kurbelwelle 1 einer Verbrennungskraftmaschine zu reduzieren. Der Schwingungsdämpfer 14 ist zu der Kurbelwelle 1 zentriert und mittels Schrauben 12 axial verschraubt. Für hinreichend Freiraum zu dem Pleuel 4 ist gesorgt. Über die Mitnehmerscheibe 16 werden Drehmomente von der Kurbelwelle 1 in den Schwingungsdämpfer 14 eingeleitet. Die Mitnehmerscheibe 16 ist über die Abstandsbolzen 23, 24 mit der Gegenscheibe 60 vernietet, so dass ein Teilmoment auf die Gegenscheibe 60 übertragen wird. Auf die Mitnehmerscheibe 16 und die Gegenscheibe 60 sind radial außen Reibbeläge beziehungsweise Gleitlager aufgeklebt oder anderweitig befestigt, welche die Reib-/Gleitflächen 36, 62, 63 bilden. Die beiden schwingenden Massen 41 und 51 befinden sich zwischen der Mitnehmer- und der Gegenscheibe und können entweder miteinander verbunden, zum Beispiel vernietet, sein, als auch jeweils lose eingelegt werden. Zum Erreichen eines möglichst großen Massenträgheitsmoments sind die Schwungmassen 41, 51 radial weit außen angeordnet und im Wesentlichen topfförmig gestaltet. Die Schwungmassen 41 und 51. werden über die Reib-/Gleitflächen 36, 62, 63 zentriert und gelagert.

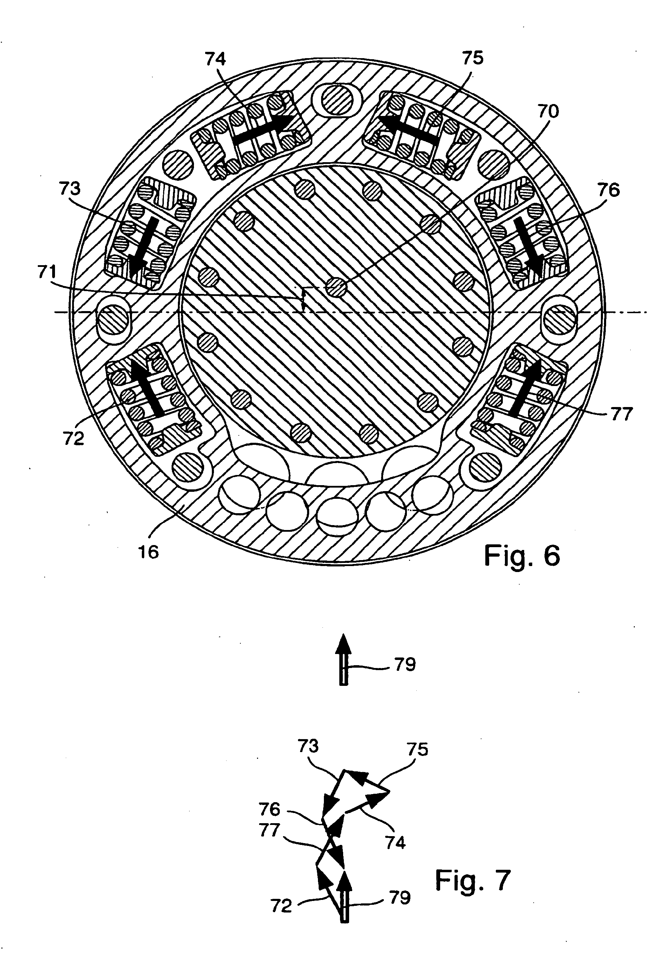

In Figur 6 ist angedeutet, dass die Druckfedern als Schraubendruckfedern ausgebildet und zwischen den Näpfen vorgespannt sind. Die Vorspannkräfte der Druckfedern sind durch Vektoren 72 bis 77 angedeutet. Außerdem ist in Figur 6 angedeutet, dass der Schwerpunkt 70 des Schwingungsdämpfers 14 in einem Abstand 71 zu dem Mittelpunkt der Mitnehmerscheibe 16 angeordnet ist. Die daraus resultierende Fliehkraft ist durch einen Vektor 79 angedeutet. Die Vorspannkräfte 72 bis 77 der Druckfedern und die Fliehkraft 79 werden genutzt, um definierte Lagerkräfte auf die Reib-/Gleitflächen 36, 62, 63 aufzubringen.

In Figur 7 ist eine Vektoraddition der Federvorspannkräfte 72 bis 77 und der Fliehkraft 79 graphisch dargestellt. Durch die erfindungsgemäße Schwingungsdämpfungseinrichtung 14 können die Kurbelwellenschwingungen im Betrieb der Brennkraftmaschine deutlich reduziert werden.

### Bezugszeichenliste

1. Kurbelwelle
2. Kurbelzapfen
3.-
4. Pleuel
5. Kurbelwange
6. Wellenzapfen
7.-
8. Ringflansch
9. -
10. Durchgangsbohrung mit Innengewinde
11. Durchgangsbohrung
12. Schrauben
13. -
14. Schwingungsdämpfer
15. -
16. Mitnehmerscheibe
17. Kreisscheibe mit zentralem Durchgangsloch
18. Durchgangsloch
19. Durchgangsloch
20. Durchgangsloch
21. Durchgangsloch
22. Durchgangsloch
23. Abstandsbolzen
24. Abstandsbolzen
25.-
26. längliches Fenster in Umfangsrichtung
27. längliches Fenster in Umfangsrichtung
28. Druckfeder
29. Druckfeder
30. -
31. -
32. Näpfe => Führung
33. Näpfe => Führung
34.-
35.-
36. Reib-/Gleitfläche
37.-
38.-
39.-
40. Kragen
41. erste Schwungmasse
42. Kreisscheibe
43. zentrales Durchgangsloch
44.-
45. Fenster
46. Fenster
47. Fenster
48. Durchgangsloch für 23, 24
49. Durchgangsloch für 23, 24
50. Kragen
51. zweite Schwungmasse
52. Kreisscheibe
53. zentrales Durchgangsloch
54.-
55. Stege
56. Fenster
57. Fenster
58.-
59.-
60. Gegenscheibe
61. Hufeisen
62. Gleit-/Reibfläche
63. Gleit-/Reibfläche
64. -
65. Fenster
66. Fenster
67.-
68. Durchgangsloch
69. Durchgangsloch
70. Schwerpunkt
71. Abstand
72. Vektor der Federvorspannkraft
73. Vektor der Federvorspannkraft
74. Vektor der Federvorspannkraft
75. Vektor der Federvorspannkraft
76. Vektor der Federvorspannkraft
77. Vektor der Federvorspannkraft
78.-
79. Fliehkraft
80. -

## Patentansprüche

1. Drehschwingungsdämpfungseinrichtung, insbesondere Wangentilger, zur Anbringung an einer Kurbelwelle (1) eines Kolbenmotors, insbesondere einer Brennkraftmaschine, wobei die Drehschwingungsdämpfungseinrichtung (14) eine Mitnehmerscheibe (16) sowie eine mit dieser drehfest verbundene Gegenscheibe (60), die in axialer Richtung von der Mitnehmerscheibe (16) beabstandet ist, aufweist, **dadurch gekennzeichnet, dass** axial zwischen der Mitnehmerscheibe (16) und der Gegenscheibe (60) zwei kreisscheibenförmige Schwungmasseneinrichtungen (41, 51) aufgenommen sind, die radial außen jeweils einen abgewinkelten Randbereich (40, 50) aufweisen, der jeweils mit seiner inneren Umfangsfläche an einer in Umfangsrichtung verlaufenden Lager- und/oder Reibfläche (36, 62), die radial außen an der Mitnehmerscheibe (16) und der Gegenscheibe (60) vorgesehen ist, drehbar gelagert sind.

2. Drehschwingungsdämpfungseinrichtung nach Anspruch 1, **dadurch gekennzeichnet, dass** die Gegenscheibe (60) radial außen eine in Umfangsrichtung unterbrochene Lager- und/oder Reibfläche (62,63) aufweist, an der eine (51) der Schwungmasseneinrichtungen begrenzt drehbar gelagert ist.

3. Drehschwingungsdämpfungseinrichtung nach Anspruch 1 oder 2, **dadurch gekennzeichnet, dass** die beiden Schwungmasseneinrichtungen (41,51) im Wesentlichen jeweils die Gestalt einer Kreisscheibe (42,52) mit einer zentralen Öffnung (43,53) aufweisen.

4. Drehschwingungsdämpfungseinrichtung nach einem der Ansprüche 1 bis 3, **dadurch gekennzeichnet, dass** die Mitnehmerscheibe (16), die Gegenscheibe (60) und die Schwungmasseneinrichtungen (41,51) jeweils mehrere Fenster aufweisen.

5. Kurbelwelle für einen Kolbenmotor, insbesondere einer Brennkraftmaschine, mit mehreren Wangen, **dadurch gekennzeichnet, dass** eine Drehschwingungsdämpfungseinrichtung (14) nach einem der vorhergehenden Ansprüche an einer Wange der Kurbelwelle (1) befestigt ist.

6. Kolbenmotor, insbesondere Brennkraftmaschine, mit einer Kurbelwelle (1) nach Anspruch 5.

## Claims

1. Torsional vibration damping device, in particular web damper, for attaching to a crankshaft (1) of a piston engine, in particular an internal combustion engine, with the torsional vibration damping device (14) having a driver disc (16) and, rotationally fixedly connected to the latter, a mating disc (60) which is spaced apart from the driver disc (16) in the axial direction, **characterized in that** two circular-disc-shaped centrifugal mass devices (41, 51) are held axially between the driver disc (16) and the mating disc (60), which centrifugal mass devices (41, 51) have in each case one angled edge region (40, 50) radially at the outside, which edge regions (40, 50) are in each case rotatably mounted with their inner peripheral surface on a bearing and/or friction surface (36, 62) which runs in the peripheral direction and which is provided radially on the outside of the driver disc (16) and the mating disc (60).

2. Torsional vibration damping device according to Claim 1, **characterized in that** the mating disc (60) has, radially at the outside, a bearing and/or friction surface (62, 63) which is discontinuous in the circumferential direction and on which one (51) of the centrifugal mass devices is mounted so as to be rotatable to a limited extent.

3. Torsional vibration damping device according to Claim 1 or 2, **characterized in that** the two centrifugal mass devices (41, 51) are each substantially designed as a circular disc (42, 52) with a central opening (43, 53).

4. Torsional vibration damping device according to one of Claims 1 to 3, **characterized in that** the driver disc (16), the mating disc (60) and the centrifugal mass devices (41, 51) each have a plurality of windows.

5. Crankshaft for a piston engine, in particular an internal combustion engine, having a plurality of webs, **characterized in that** a torsional vibration damping device (14) according to one of the preceding claims is fastened to a web of the crankshaft (1).

6. Piston engine, in particular internal combustion engine, having a crankshaft (1) according to Claim 5.

## Revendications

1. Amortisseur de vibrations torsionnelles, en particulier amortisseur de support latéral, devant être monté sur un vilebrequin (1) d'un moteur à piston, en particulier d'un moteur à combustion interne, l'amortisseur de vibrations torsionnelles (14) présentant un disque d'entraînement (16) ainsi qu'un disque conjugué (60) connecté à celui-ci de manière solidaire en rotation, qui est espacé du disque d'entraînement (16) dans la direction axiale, **caractérisé en ce que** deux dispositifs à masse d'inertie (41, 51) en forme de disques circulaires sont reçus axialement entre le disque d'entraînement (16) et le disque conjugué (60), et présentent radialement à l'extrémité à chaque fois une région de bord coudée (40, 50), qui est montée à rotation à chaque fois avec sa surface périphérique interne contre une surface de palier et/ou de frottement (36, 62) s'étendant dans la direction périphérique, qui est prévue radialement à l'extérieur sur le disque d'entraînement (16) et le disque conjugué (60).

2. Amortisseur de vibrations torsionnelles selon la revendication 1, **caractérisé en ce que** le disque conjugué (60) présente radialement à l'extérieur une surface de palier et/ou de frottement (62, 63) interrompue dans la direction périphérique, sur laquelle est monté de manière à pouvoir tourner de façon limitée, l'un (51) des dispositifs à masse d'inertie.

3. Amortisseur de vibrations torsionnelles selon la revendication 1 ou 2, **caractérisé en ce que** les deux dispositifs à masse d'inertie (41, 51) présentent essentiellement la forme d'un disque circulaire (42, 52) avec une ouverture centrale (43, 53).

4. Amortisseur de vibrations torsionnelles selon l'une quelconque des revendications 1 à 3, **caractérisé en ce que** le disque d'entraînement (16), le disque conjugué (60) et les dispositifs à masse d'inertie (41, 51) présentent à chaque fois plusieurs fenêtres.

5. Vilebrequin pour un moteur à piston, en particulier un moteur à combustion interne, comprenant plusieurs supports latéraux, **caractérisé en ce qu'**un amortisseur de vibrations torsionnelles (14) selon l'une quelconque des revendications précédentes est fixé sur un support latéral du vilebrequin (1).

6. Moteur à piston, en particulier moteur à combustion interne, comprenant un vilebrequin (1) selon la revendication 5.
